# FASCICULE DE BREVET EUROPEEN

(11) **EP 1 800 018 B1**
(45) Date de publication et mention de la délivrance du brevet: **29.02.2012**
(21) Numéro de dépôt: 05804221.9
(22) Date de dépôt: 23.09.2005
(51) Int. Cl.: F16D 65/097, F16D 55/227

(54) **ELEMENT DE FRICTION ET FREIN A DISQUE**
REIBELEMENT UND SCHEIBENBREMSE
FRICTION ELEMENT AND DISC BRAKE

(30) Priorité: 08.10.2004 FR 0410665
(43) Date de publication de la demande: 27.06.2007
(73) Titulaire: ROBERT BOSCH GMBH, 70442 Stuttgart (DE)
(72) Inventeur: VANOUCHE, Norbert, F-49800 Trelaze (FR); MARY DIT CORDIER, Pascal, F-49140 Seiches sur le Loir (FR); GAYE, André, F-94700 Maisons Alfort (FR); MENGUY, Daniel, F-53000 Laval (FR); HOUDEBINE, Christophe, F-49610 Juigne sur Loire (FR)
(74) Mandataire: Hurwic, Aleksander Wiktor
(86) Numéro de dépôt international: PCT/FR2005/002374
(87) Numéro de publication internationale: WO 2006/040428

(56) Documents cités:
- EP-A- 0 475 335
- DE-A1- 3 641 921
- US-A- 4 289 217

## Description

La présente invention se rapporte à un élément de friction, notamment de type plaquettes et à un frein à disque comportant un tel élément.

Il est connu, notamment du document EP 0 475 335 A1, un élément de friction comportant un ressort destiné à réduire les vibrations de plaquettes de frein dans un frein à disque. Le ressort, réalisé en fil d'acier, comporte un enroulement dans sa partie centrale, et un premier et un deuxième bras de longueur différente et s'étendant dans deux direction opposées, sensiblement tangentes à l'enroulement central. Le ressort est fixé à une partie supérieure d'un support de garniture de la plaquette de frein, par l'intermédiaire d'un rivet monté dans l'enroulement, et les extrémités respectives des bras sont destinées à venir en appui contre la surface intérieure d'une voûte d'un étrier du frein à disque. Ce ressort est monté sur les plaquettes intérieure et extérieure, c'est-à-dire de part et d'autre d'un disque de frein.

Les freins à disque étant des éléments essentiels de la sécurité dans un véhicule automobile, il est nécessaire de réaliser des montages d'une grande fiabilité. Il faut alors pour les freins à disque munis de tels plaquettes de frein vérifier de manière soigneuse le montage du rivet qui peut en cas de fixation défectueuse ne pas maintenir le ressort pendant toute la durée de vie du frein , le ressort risque alors de venir se placer entre le disque et la plaquette intérieure, réduisant de manière inacceptable le niveau de freinage attendu du frein.

De plus, un problème persistant dans les freins à disque est le non recul suffisant des plaquettes de frein, en particulier de la plaquette de frein intérieure, provoquant un frottement résiduel entre le disque et la plaquette et par conséquent générant une usure prématurée des garnitures de friction. Actuellement le recul de la plaquette intérieure s'effectue naturellement lorsque la pression dans le frein est relâchée, du fait d'un léger voile du disque de frein. De plus, le piston hydraulique provoquant le déplacement de la plaquette intérieure, est rappelé en position par un joint de forme carrée, assurant également l'étanchéité du coulissement du piston. Les freins à disque de cette conception fonctionnent de manière satisfaisante, cependant il serait préférable d'en améliorer le fonctionnement.

D'autre part, il est de plus en plus recherché des dispositifs équipant les véhicules automobiles de fonctionnement très silencieux. C'est par conséquent également le cas pour le circuit de freinage en particulier pour les freins à disques équipant les véhicules automobiles. Un bruit fréquent apparaissant lors du fonctionnement du frein à disque est appelé "squeal" en terminologie anglo-saxonne. Ce bruit apparaît lors du fonctionnement à basse pression du frein à disque. Il est alors nécessaire de réduire et si possible d'éliminer ce bruit en maintenant de manière ferme la ou les plaquettes de frein par rapport à la chape et/ou l'étrier.

D'autre part, il est également nécessaire d'obtenir des prix de revient faible du frein à disque afin de conserver des produits concurrentiels. Pour cela, il est souhaitable d'avoir un frein à disque de construction simple et rapide, requérant un minimum de pièces.

Le document US 4 289 217 A montre un élément de friction d'après le préambule de la revendication 1.

C'est par conséquent un but de la présente invention d'offrir un moyen de friction assurant un fonctionnement amélioré du frein à disque.

C'est également un but de la présente invention d'offrir un frein à disque de prix de revient faible.

C'est également un but de la présente invention d'offrir un procédé de fabrication d'un frein simple et rapide.

C'est par conséquent un but de la présente invention d'offrir un frein à disque à la fois présentant un très faible couple résiduel et donc un rappel des plaquettes de frein efficace silencieux, d'une grande sûreté de fabrication et également d'un prix de revient faible.

Ces buts sont atteints par une plaquette de frein munie d'une plaque support dans laquelle est percé un orifice dans lequel est monté un enroulement d'un ressort fil, le ressort comportant un premier et deuxième bras destinés à venir en réaction contre une voûte d'un frein à disque, les bras étant de longueur différente de manière à exercer un effort dissymétrique sur la plaquette en direction de la chape, réduisant de manière importante le bruit dit de « squeal » les bras étant déformables de manière élastique dans le sens axial de déplacement de la plaquette, ceux-ci exercent un effort de rappel de la plaquette dans sa position repos.

En d'autres termes, l'enroulement de forme sensiblement cylindrique est inséré dans un orifice de diamètre correspondant, chacun des bras s'étendant de part et d'autre part de la plaque support. La présente invention assure alors une fixation d'une grande fiabilité puisque aucune pièce supplémentaire n'étant ajoutée, le risque de montage défectueux est alors réduit. D'autre part du fait de l'appui des bras contre la voûte, les spires de l'enroulement sont déformées en permanence radialement vers l'extérieur, confirmant le montage du ressort dans l'orifice de la plaque support.

Enfin dans le cas extrême, où l'enroulement parviendrait à s'échapper de l'orifice du fait des bras disposés de part est d'autre de la plaque supporte, le ressort resterait lié à la plaquette de frein et ne viendrait pas s'interposer entre le disque et la plaquette de frein.

La présente invention a alors principalement pour objet un élément de friction pour frein à disque avec les caractéristiques de la revendication 1.

La présente invention a également pour objet un élément de friction pour frein à disque caractérisé en ce que le deuxième bras est orienté en avant du premier bras dans le sens de rotation du disque de frein. Cette disposition particulière assure une grande stabilité de l'élément de friction à faible pression de freinage du fait de l'appui augmenté de l'élément de friction contre la chape du frein à disque dans le sens de rotation du disque de frein.

La présente invention a également pour objet un élément de friction pour frein à disque caractérisé en ce que les extrémités respectives des premier et deuxième bras sont recourbées sensiblement dans la direction d'un axe des spires

La présente invention a également pour objet un élément de friction caractérisé en ce qu'elle forme l'élément de friction intérieur du frein à disque.

La présente invention a également pour objet un frein à disque comportant un étrier, un élément de friction intérieur et un élément de friction extérieur, au moins un piston apte à appliquer l'élément de friction intérieur contre une première face d'un disque de frein caractérisé en ce qu'il comporte au moins un élément de friction selon la présente invention, les bras dudits ressort étant montés en appui sous contrainte mécanique contre une face intérieure d'un voûte de l'étrier.

La présente invention a également pour objet un frein à disque caractérisé en ce qu'il comporte une chape destinée à être solidaire d'un porte-fusée d'un véhicule automobile, en ce que l'étrier est monté coulissant par rapport à la chape, en ce que l'étrier comporte un nez apte à appliquer la plaquette extérieure contre une deuxième face du disque de frein en ce qu'il comporte des première et deuxième glissières de forme complémentaires aux premier et deuxième doigts de la plaquette intérieure, le premier doigt étant monté avec un jeu dans la première glissière dans le sens de rotation du disque de frein, de manière à ce que l'ensemble plaquette intérieure et chape forme un cadre rigide lorsque le matériau de friction de la plaquette intérieure vient en contact du disque de frein.

La présente invention a également pour objet un frein à disque caractérisé en ce que la plaquette extérieure est solidaire du nez d'étrier.

La présente invention a également pour objet un frein à disque caractérisé en ce que la plaquette extérieure est maintenue transversalement par rapport à l'étrier par coopération d'ergots et de cavités de réception desdits ergots portés par l'élément de friction et le nez d'étrier.

La présente invention a également pour objet un frein à disque caractérisé en ce que la chape comporte une première et une deuxième colonnettes s'étendant parallèlement à l'axe du disque de frein et destinées à coulisser respectivement dans des premier et deuxième alésages pratiqués dans l'étrier.

Un procédé de fabrication d'un élément de friction comportant entre autres les étapes
- d'introduire un premier bras d'un élément ressort dans l'orifice de la plaque support ;
- de rapprocher le premier et le deuxième bras de manière à réduire le diamètre de l'enroulement ;
- de faire pénétrer l'enroulement dans l'orifice ;
- de relâcher les bras du ressort de rappel, l'enroulement étant alors maintenu fermement dans l'orifice de la plaque support.

La présente invention a pour avantage d'être de réalisation très simple.

L'élément de friction selon la présente invention en fin de phase de freinage retrouve sa position de repos du fait de l'élasticité de bras, maintient le patin intérieur et réduit alors les vibrations responsables du bruit, à la fois hors freinage et en freinage à faible pression d'actionnement.

La présente invention sera mieux comprise à l'aide de la description qui va suivre et des dessins en annexes pour lesquels l'avant et l'arrière sont définis par rapport au sens de rotation du disque de frein et correspondent respectivement à la droite et la gauche des dessins, le haut et le bas correspondent aux parties supérieure et inférieure des dessins et sur lesquels:
- La figure 1 est une vue de face d'un élément de friction selon la présente invention
- La figure 2 une vue en perspective partielle d'un frein à disque selon la présente invention ;
- La figure 3 est une vue en coupe transversale du frein à disque de la figure 2 comportant un plaquette selon la figure 1 ;
- La figure 4 est une vue en perspective partielle d'un deuxième exemple de réalisation d'un frein à disque selon la présente invention ;

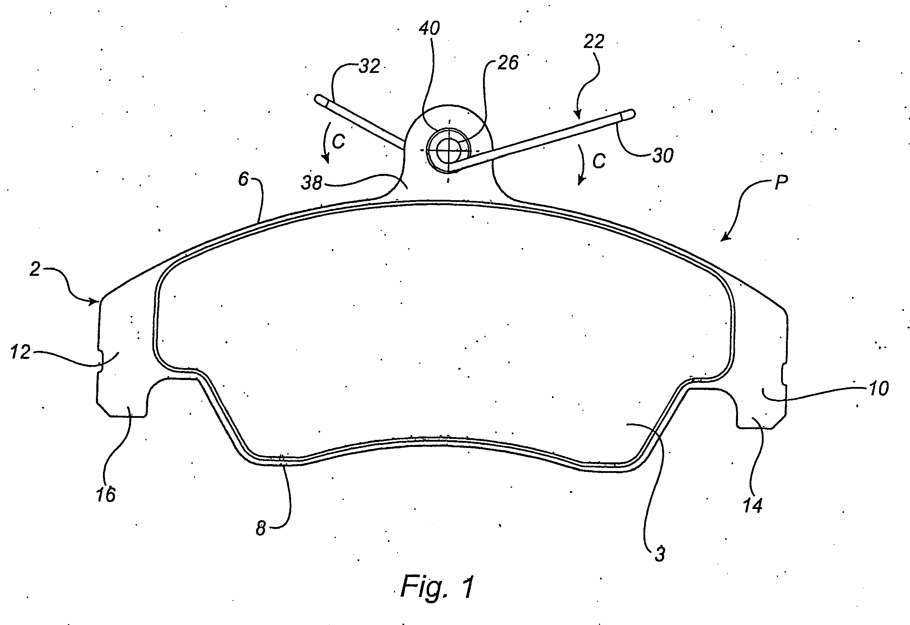

Sur la figure 1, on peut voir un élément de friction ou plaquette de frein P selon la présente invention comportant une plaque support 2 et matériau de friction 3 fixé sur une face de la plaque support. L'élément de friction est de forme incurvée de manière à suivre la forme extérieure d'un disque de frein. L'élément de friction comporte une extrémité supérieure 6 délimité par un premier arc de cercle et une extrémité inférieure 8 délimitée par un second arc de cercle de diamètre sensiblement égal à celui du premier arc de cercle.

L'élément de friction comporte à une première 10 et une deuxième extrémités 12 latérales, et premier 14 et un deuxième 16 doigts aptes à coopérer respectivement avec une première 18 et une deuxième 20 glissières portées par une chape et assurant le guidage axial de l'élément de friction.

La plaquette de frein comporte également un élément élastique de rappel 22 de la plaquette de frein en position repos en fin de phase de freinage. L'élément de rappel 22 est fabriqué dans l'exemple représenté en fil, avantageusement en fil à ressort, enroulé en spires de manière à formé un cylindre 26 sensiblement régulier, et chaque extrémité du fil 28 formant un premier 30 et un deuxième 32 bras aptes à coopérer avec une voûte d'un étrier.

Le ressort de rappel 22 est fixé fermement à la plaque support 2 par l'intermédiaire d'une oreille 38 en saillie radialement vers l'extérieur du premier arc de cercle. L'oreille 38 est sensiblement centrée sur la plaque support de manière à se trouver sensiblement dans un plan de symétrie du frein à disque.

L'oreille 38 comporte un orifice 40 de réception du cylindre 26 de spires 24, ledit orifice 40 comportant un diamètre sensiblement égal au diamètre de l'enroulement 26 de manière à permettre une insertion simple de celui-ci dans l'orifice 40. Lorsque le ressort est monté dans le frein à disque, les premier et deuxième bras 30,32 ont tendance à s'écarter l'un de l'autre selon les flèches C et D, ouvrant l'enroulement et augmentant son diamètre, ainsi la fixation du ressort à la plaque support est confirmé lors du montage

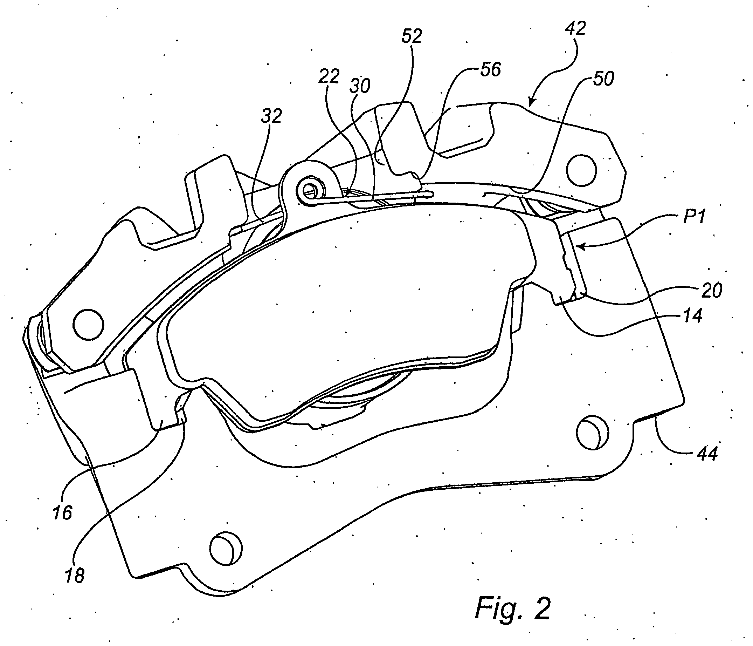

Sur les figures 1 et 2, le premier 30 bras du ressort 22 disposé en avant dans le sens de rotation du disque de frein indiqué par la flèche F, est de longueur supérieure à celle du deuxième bras 32 disposé en arrière dans le sens de rotation du disque de frein, le sens de rotation étant indiqué par la flèche F. Un tel ressort applique à la plaquette de frein un effort plus important sur la partie arrière de la plaquette de frein que sur la partie avant, confirmant un appui permanent de la plaque support sur la chape, en particulier du doigt 16 dans la glissière 18 . Cette configuration particulière du ressort permet de réduire les bruits généré par le frein lorsque la pression de freinage est faible, bruit dit de « squeal » en terminologie anglo-saxonne.

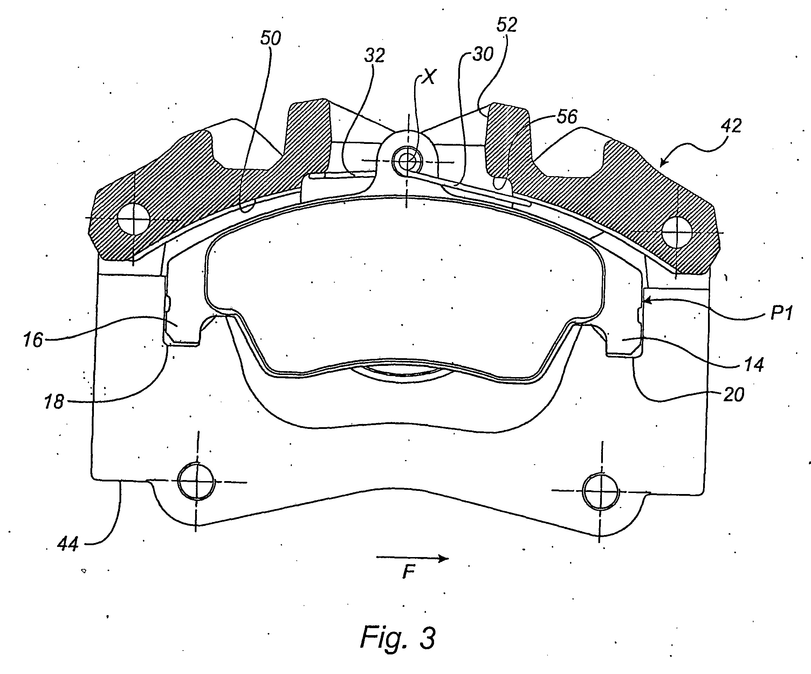

Sur les figures 2 et 3, on peut voir le la plaquette de frein selon la présente invention monté dans un frein à disque selon la présente invention. Le frein à disque comporte un étrier 42 monté à coulissement selon un axe X orthogonal au plan de la feuille par rapport à une chape 44 fixée sur un porte fusée, une plaquette intérieure P1 et une plaquette extérieure (non représentée) disposées en regard l'une de l'autre et destinées à s'appliquer respectivement contre une première et une deuxième face d'un disque de frein (non représenté).

La plaquette de frein intérieure est une plaquette selon la présente invention montée entre la chape 44 et l'étrier 42 et déplacée lors d'une phase de freinage par un piston hydraulique monté à coulissement dans un cylindre hydraulique 54. La plaquette extérieure est en appui contre un nez d'étrier raccordé au cylindre hydraulique par une voûte 50. La plaquette extérieure et est appliquée contre la deuxième face du disque de frein par coulissement de l'étrier par réaction de l'appui de la première plaquette P1 contre la première face du disque de frein. Le coulissement entre l'étrier et la chape est assuré au moyen de colonnettes montées à coulissement dans des alésages pratiqués dans l'étrier de part et d'autre du cylindre hydraulique. Il est bien entendu que les colonnettes peuvent être portées par l'étrier et les alésages pratiqués dans la chape.

La chape 44 est disposée d'un seul côté du disque de frein.

La chape 44 comporte des première 18 et deuxième 20 glissières de réception des doigts 14,16 pour guider la plaquette P1 dans son coulissement. Les premier et deuxième bras 30,32 sont montés en appui contre la voûte 50 de manière à ce qu'un effort permanent soit appliqué à la plaquette intérieure vers le bas par le ressort de rappel.)

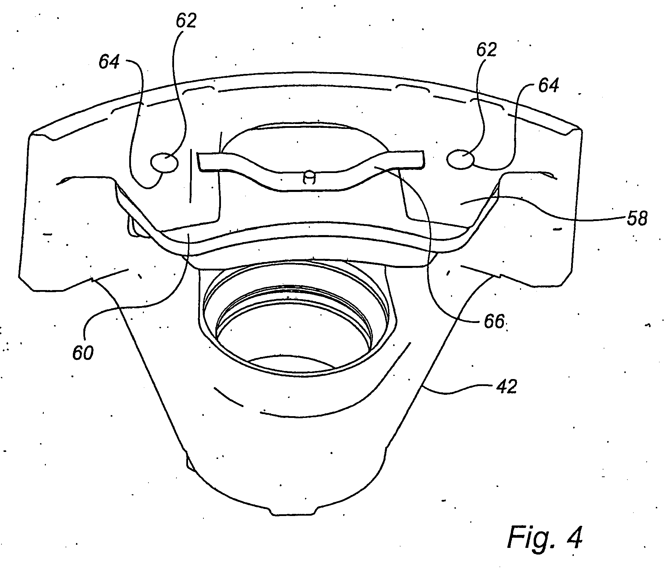

La plaquette extérieure (non représentée) est fixé au nez d'étrier, par exemple par vissage. Un mode de fixation sera décrit en relation avec la figure 4.

Dans l'exemple représenté, le frein à disque est du type « pull-push » en terminologie anglo-saxonne, c'est-à-dire que les efforts appliqués à la plaquette de frein lorsqu'elle entre en contact avec une face du disque de frein servent à rigidifier le frein à disque. Lorsque la plaquette intérieure vient en contact d'une face du disque de frein, elle est entraînée dans le sens de rotation du disque de frein, du fait du doigt 16, l'effort d'entraînement de la plaquette est transmis à la chape par l'intermédiaire de la glissière 18, la plaquette « tire » sur la chape, celle-ci se déforme et le doigt 14 qui est monté avec un jeu dans la glissière 20, vient en butée contre la chape et vient pousser sur la chape, le frein à disque en est alors rigidifié.

Les glissières sont de forme complémentaire à celle des doigts de manière à ce que la chape et la plaque support forment un cadre sensiblement rigide lorsque la plaquette intérieure est en contact du disque de frein.

Dans l'exemple représenté la voûte 50 comporte une lumière 52 axiale dans laquelle est disposée l'oreille et de dimension axiale suffisante pour permettre à l'oreille de coulisser en direction du disque de frein. La fenêtre 52 permet également d'augmenter l'évacuation de la chaleur provoquée lors d'une action de freinage. De manière avantageuse, les extrémités libres des bras 30,32 sont recourbées de manière à assurer un bon ancrage du ressort dans la voûte et de permettre également un glissement au delà d'un déplacement déterminé de la plaquette intérieure en direction du disque de frein.

Nous allons maintenant expliquer le mode de fonctionnement du frein selon la présente invention.

Lors d'une action de freinage, la pression hydraulique augmente dans le circuit de freinage, provoquant un déplacement du piston, qui pousse la plaquette intérieure P en direction de la première face du disque de réaction. Les extrémités des bras 30,32 s'ancrent dans la voûte cependant l'enroulement suit la plaquette P1, par conséquent les bras 30,32 se déforment élastiquement pour permettre à la plaquette P de venir en contact du disque de frein. Par réaction l'étrier coulisse par rapport à la chape et applique la plaquette extérieure contre le disque de frein par l'intermédiaire du nez d'étrier.

A la fin du freinage, la pression diminue dans le circuit de freinage, le piston hydraulique recule sous l'effet d'un joint carré formant l'étanchéité de coulissement du piston hydraulique. Du fait de la déformation élastique des bras 30,32 du ressort 22, celui-ci exerce un effort de rappel élastique axial, la plaquette P1 est ainsi ramenée de manière certaine en position repos.

A chaque action de freinage, la garniture des plaquette s'use, le frein à disque comporte un dispositif de rattrapage d'usure déplaçant la position repos du piston hydraulique de manière à ne pas allonger la course nécessaire à l'application des plaquettes contre le disque. Afin que le ressort de rappel ne gêne pas l'actionnement du dispositif de rattrapage d'usure, les bras 30,32 du ressort 22 sont dimensionnés de telle manière qu'au delà d'un certain effort appliqué à ceux-ci, les extrémités des bras glissent sur la voûte jusqu'à une position plus avancés sur la voûte.

De plus, l'utilisation d'une plaquette selon la présente invention permet de réduire également le bruit dit de « rattle » en terminologie anglo-saxonne pouvant apparaître hors freinage du fait d'un flottement de la plaquette de frein, du fait de son bon maintien en place hors freinage.

Sur la figure 4, on peut voir un deuxième exemple d'un frein selon la présente invention dans lequel la plaquette extérieure P2 est alors fixée sur le nez d'étrier 58 qui la maintien en rotation. Dans l'exemple représenté, une face arrière 60 de la plaque support 61, opposée à celle comportant la garniture de freinage comporte des tétons 62 en saillie coopérant avec des ouvertures 64 pratiqués dans le nez d'étrier. Les ouvertures et les tétons sont dimensionnés de manière à ce que la fixation de la plaquette sur le nez d'étrier soit sans jeu. De manière avantageuse, une lame ressort 66 est fixée en son centre sur la face arrière de la plaque support et comporte des extrémités coopérant avec les nez d'étrier par déformation élastique de la lame ressort. Ainsi la lame exerce un effort permanent de rapprochement de la plaque support et du nez d'étrier, de manière à immobilier axialement la plaquette extérieure.

Dans la description ci-dessus, il s'agit d'un frein à disque coulissant, la plaquette selon la présente invention forme la plaquette intérieure, cependant il est bien entendu que dans le cas d'un frein à disque dit fixe, comportant aux moins deux pistons disposés respectivement de part et d'autre du disque de frein, chaque plaquette de frein est une plaquette selon la présente invention.

Il est bien entendu que la présente invention s'applique également à un frein à disque de type classique dans lequel les colonnette sont portées par l'étrier et coulissent dans la chape, la chape qui s'étend de part et d'autre du disque de frein et qui maintient fixe dans le sens de rotation du disque de frein à la fois la plaquette de frein intérieure et la plaquette de frein extérieure.

La présente invention s'applique en particulier à un système de freinage pour voiture particulière.

## Revendications

1. Elément de friction (P) pour frein à disque comportant une plaque support (2) et un matériau de friction (3) fixé sur une des faces de ladite plaque support (2), ladite plaque support (2) étant sensiblement en arc de cercle, et comportant également une saillie (38) s'étendant radialement vers l'extérieur de l'arc de cercle, un élément ressort (22) étant fixé à ladite saillie radiale (38), ledit élément ressort (22) étant réalisé en fil enroulé en spires et muni d'un premier et d'un deuxième bras (30,32) s'étendant dans deux directions opposées et sensiblement tangentiellement aux dites spires, ladite plaque support (2) comportant un orifice de montage (40) de l'élément ressort, dans lequel est monté l'enroulement, les premier et deuxième bras (30,32) s'étendant de part et d'autre de la plaque support (2) **caractérisé en ce que** le premier et deuxième bras (30,32)sont de longueur différente de manière à exercer un effort orienté vers l'avant ou vers l'arrière de l'élément de friction et que ledit élément comporte respectivement à une première et à une deuxième extrémités (10,12), un premier et un deuxième doigts (14,16) aptes à coopérer respectivement avec une première et une deuxième glissières (18,20) de coulissement pratiquées dans une chape (44) du frein à disque pour former un cadre sensiblement rigide lorsque l'élément de friction est en contact du disque de frein.

2. Elément de friction pour frein à disque selon la revendication 1 **caractérisé en ce que** le deuxième bras (32)est orienté en avant du premier bras (30) dans le sens de rotation (F) du disque de frein.

3. Elément de friction pour frein à disque selon la revendication 1 ou 2 **caractérisé en ce que** les extrémités respectives des premier et deuxième bras (30,32) sont recourbées sensiblement dans la direction d'un axe des spires

4. Elément de friction selon l'une des revendications 1 à 3 **caractérisé en ce qu'**elle forme l'élément de friction intérieur du frein à disque.

5. Frein à disque comportant un étrier, un élément de friction intérieur et un élément de friction extérieur, au moins un piston apte à appliquer l'élément de friction intérieur contre une première face d'un disque de frein **caractérisé en ce qu'**il comporte au moins un élément de friction selon l'une des revendications précédentes, les bras (30,32) dudits ressort étant montés en appui sous contrainte mécanique contre une face intérieure d'un voûte (50) de l'étrier (42).

6. Frein à disque selon la revendication 5 **caractérisé en ce qu'**il comporte une chape (44) destinée à être solidaire d'un porte-fusée d'un véhicule automobile, **en ce que** l'étrier (42) est monté coulissant par rapport à la chape (44), **en ce que** l'étrier (42) comporte un nez apte à appliquer la plaquette extérieure contre une deuxième face du disque de frein **en ce qu'**il comporte des première et deuxième glissières (18,20) de forme complémentaires aux premier et deuxième doigts (14,16) de l'élément de friction, le premier doigt (14) étant monté avec un jeu dans la première glissière (18) dans le sens de rotation (F) du disque de frein, de manière à ce que l'ensemble plaquette intérieure et chape (44) forme un cadre rigide lorsque le matériau de friction de la plaquette intérieure vient en contact du disque de frein.

7. Frein à disque la revendication 5 ou 6 **caractérisé en ce que** la plaquette extérieure est solidaire du nez d'étrier.

8. Frein à disque selon la revendication précédente **caractérisé en ce que** la plaquette extérieure est maintenue transversalement par rapport à l'étrier par coopération d'ergots (62) et de cavités (64) de réception desdits ergots (62) portés par l'élément de friction et le nez d'étrier.

9. Frein à disque selon l'une des revendications 5 à 8 **caractérisé en ce que** la chape (44) comporte une première et une deuxième colonnettes s'étendant parallèlement à l'axe du disque de frein et destinées à coulisser respectivement dans des premier et deuxième alésages pratiqués dans l'étrier.

## Claims

1. Friction element (P) for a disk brake that includes a support plate (2) and a friction material (3) fixed on one of the faces of said support plate (2), said support plate (2) being substantially in the form of an arc of a circle, and that also includes a projection (38) extending radially toward the outside of the arc of the circle, a spring element (22) being fixed to said radial projection (38), said spring element (22) being produced from wire wound as turns and provided with a first and with a second arm (30, 32) that extend in two opposite directions substantially tangentially to said turns, said support plate (2) including an orifice (40) for the fitting of the spring element, in which the wound section is mounted, the first and second arms (30, 32) extending on either side of the support plate (2), **characterized in that** the first and second arms (30, 32) are of different lengths so as to exert a force oriented toward the front or toward the rear of the friction element, and **in that** said element includes respectively at a first and a second end (10, 12) a first and a second finger (14, 16) capable of interacting, respectively, with a first and a second slideway (18, 20) made in a carrier of the disk brake to form a rigid framework when the friction material of the inside pad comes into contact with the brake disk.

2. Friction element for a disk brake according to Claim 1, **characterized in that** the second arm (32) is oriented forward of the first arm (30) in the direction of rotation (F) of the brake disk.

3. Friction element for a disk brake according to Claim 1 or 2, **characterized in that** the respective ends of the first and second arms (30, 32) are curved substantially toward an axis of the turns.

4. Friction element according to one of Claims 1 to 3, **characterized in that** it forms the inside friction element of the disk brake.

5. Disk brake that includes a caliper, an inside friction element and an outside friction element, at least one piston capable of applying the inside friction element against a first face of a disk brake, **characterized in that** it includes at least one friction element according to one of the preceding claims, the arms (30, 32) of said spring being mounted so as to bear under mechanical stress against an inside face of an arch (50) of the caliper (42).

6. Disk brake according to Claim 5, **characterized in that** it includes a carrier (44) designed to be secured to a stub axle of a motor vehicle, **in that** the caliper (42) is mounted so as to slide relative to the carrier (44), **in that** the caliper (42) includes a nose capable of applying the outside pad against a second face of the brake disk, **in that** it includes first and second slides (18, 20) of a shape that complements the first and second fingers (14, 16) of the friction element, the first finger (14) being mounted with clearance in the first slide (18) in the direction of rotation (F) of the brake disk such that the inside pad/carrier (44) assembly forms a rigid framework when the friction material of the inside pad comes into contact with the brake disk.

7. Disk brake according to Claim 5 or 6, **characterized in that** the outside pad is integral with the caliper nose.

8. Disk brake according to the preceding claim, **characterized in that** the outside pad is held transversely relative to the caliper by interaction of pegs (62) and of cavities (64) for receiving said pegs (62) carried by the friction element and the caliper nose.

9. Disk brake according to one of Claims 5 to 8, **characterized in that** the carrier (44) includes a first and a second pin that extend parallel to the axis of the brake disk and are designed to slide, respectively, in the first and second bores made in the caliper.

## Patentansprüche

1. Reibelement (P) für eine Scheibenbremse, mit einer Trägerplatte (2) und einem an einer der Flächen der Trägerplatte (2) befestigten Reibmaterial (3), wobei die Trägerplatte (2) im Wesentlichen kreisbogenförmig ist und auch einen Vorsprung (38) aufweist, der sich radial zum Inneren des Kreisbogens erstreckt, wobei ein Federelement (22) am radialen Vorsprung (38) befestigt ist, das Federelement (22) aus spiralförmig gewickeltem Draht besteht und mit einem ersten und einem zweiten Arm (30, 32) versehen ist, die sich in zwei entgegengesetzte Richtungen und im Wesentlichen tangential zu den Windungen erstrecken, die Trägerplatte (2) eine Öffnung (40) zum Anbringen des Federelements aufweist, in der die Wicklung angebracht ist, und sich der erste und der zweite Arm (30, 32) auf der einen und auf der anderen Seite der Trägerplatte (2) erstrecken, **dadurch gekennzeichnet, dass** der erste und der zweite Arm (30, 32) unterschiedliche Längen haben, um eine zum vorderen oder zum hinteren Teil des Reibelements gerichtete Kraft auszuüben, und das Element an einem ersten bzw. an einem zweiten Ende (10, 12) einen ersten und einen zweiten Finger (14, 16) aufweist, die dazu geeignet sind, mit einer ersten bzw. einer zweiten Gleitschiene (18, 20) zusammenzuwirken, die in einem Halter (44) der Scheibenbremse ausgebildet sind, so dass ein im Wesentlichen starrer Rahmen gebildet ist, wenn das Reibelement die Bremsscheibe berührt.

2. Reibelement für eine Scheibenbremse nach Anspruch 1, **dadurch gekennzeichnet, dass** der zweite Arm (32) in Drehrichtung (F) der Bremsscheibe zum vorderen Teil des ersten Arms (30) ausgerichtet ist.

3. Reibelement für eine Scheibenbremse nach Anspruch 1 oder 2, **dadurch gekennzeichnet, dass** die jeweiligen Enden des ersten und zweiten Arms (30, 32) im Wesentlichen in Richtung einer Achse der Windungen umgebogen sind.

4. Reibelement nach einem der Ansprüche 1 bis 3, **dadurch gekennzeichnet, dass** es das innere Reibelement der Scheibenbremse bildet.

5. Scheibenbremse mit einem Bremssattel, einem inneren Reibelement und einem äußeren Reibelement, mindestens einem Kolben, der dazu geeignet ist, das innere Reibelement gegen eine erste Fläche einer Bremsscheibe zu drücken, **dadurch gekennzeichnet, dass** sie mindestens ein Reibelement nach einem der vorhergehenden Ansprüche aufweist, wobei die Arme (30, 32) der Feder so angebracht sind, dass sie unter mechanischer Spannung an einer Innenfläche einer Wölbung (50) des Bremssattels (42) anliegen.

6. Scheibenbremse nach Anspruch 5, **dadurch gekennzeichnet, dass** sie einen Halter (44) aufweist, der dazu vorgesehen ist, mit einem Achsschenkelhalter eines Kraftfahrzeugs fest verbunden zu sein, der Bremssattel (42) in Bezug auf den Halter (44) gleitend angebracht ist, der Bremssattel (42) eine Nase aufweist, die den äußeren Bremsklotz gegen eine zweite Fläche der Bremsscheibe drücken kann, und sie eine erste und eine zweite Schiene (18, 20) aufweist, deren Form komplementär zum ersten und zum zweiten Finger (14, 16) des Reibelements ist, wobei der erste Finger (14) mit Spiel in der ersten Schiene (18) in Drehrichtung (F) der Bremsscheibe angebracht ist, so dass die Baugruppe aus innerem Bremsklotz und Halter (44) einen starren Rahmen bildet, wenn das Reibmaterial des inneren Bremsklotzes mit der Bremsscheibe in Kontakt gelangt.

7. Scheibenbremse nach Anspruch 5 oder 6, **dadurch gekennzeichnet, dass** der äußere Bremsklotz fest mit der Nase des Bremssattels verbunden ist.

8. Scheibenbremse nach dem vorhergehenden Anspruch, **dadurch gekennzeichnet, dass** der äußere Bremsklotz durch Zusammenwirkung von im Reibelement und in der Bremssattelnase ausgebildeten Ansätzen (62) und Hohlräumen (64) zur Aufnahme der Ansätze (62) quer zum Bremssattel gehalten ist.

9. Scheibenbremse nach einem der Ansprüche 5 bis 8, **dadurch gekennzeichnet, dass** der Halter (44) einen ersten und einen zweiten Steg aufweist, die sich parallel zur Achse der Bremsscheibe erstrecken und dazu vorgesehen sind, in einer ersten bzw. einer zweiten Bohrung zu gleiten, die im Bremssattel ausgebildet sind.
